(19) Europäisches Patentamt
European Patent Office
Office européen des brevets

(11) **EP 3 839 442 B1**

(12) **EUROPÄISCHE PATENTSCHRIFT**

(45) Veröffentlichungstag und Bekanntmachung des Hinweises auf die Patenterteilung:
**27.10.2021  Patentblatt 2021/43**

(51) Int Cl.:
*G01D 5/244* *(2006.01)*    *G01D 5/14* *(2006.01)*

(21) Anmeldenummer: **19020720.9**

(22) Anmeldetag: **20.12.2019**

(54) **VORRICHTUNG UND KORREKTURVERFAHREN ZUR AUTOMATISCHEN BERECHNUNG VON KORREKTURWERTEN FÜR DIE WINKELMESSWERTE EINES DREHGEBERS SOWIE DREHGEBER**

ROTARY ENCODER AND DEVICE AND CORRECTION METHOD FOR AUTOMATICALLY CALCULATING CORRECTION VALUES FOR THE ANGULAR MEASUREMENT VALUES OF A ROTARY ENCODER

DISPOSITIF ET PROCÉDÉ DE CORRECTION DESTINÉS AU CALCUL AUTOMATIQUE DE VALEURS DE CORRECTION POUR VALEURS MESURÉES D'ANGLE D'UN CAPTEUR DE ROTATION AINSI QUE CAPTEUR DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.06.2021  Patentblatt 2021/25**

(73) Patentinhaber: **Baumer IVO GmbH & Co. KG**
**78056 Villingen-Schwenningen (DE)**

(72) Erfinder:
• **Ritzmann, Daniel**
**CH-8200 Schaffhausen (CH)**
• **Sperling, Tilo**
**DE-78333 Stockach (DE)**
• **Basler, Stefan**
**DE-78086 Brigachtal (DE)**

(74) Vertreter: **Strauss, Steffen**
**Baumer Innotec AG**
**Intellectual Property**
**Hummelstrasse 17**
**8501 Frauenfeld (CH)**

(56) Entgegenhaltungen:
**WO-A1-2018/150833     US-A- 4 677 377**
**US-A1- 2011 084 691     US-A1- 2018 231 402**

EP 3 839 442 B1

**Beschreibung**

Die Erfindung betrifft eine Vorrichtung und ein Korrekturverfahren zur Berechnung, insbesondere zur automatischen Berechnung, von Korrekturwerten für Winkelmesswerte eines Drehgebers. Die Erfindung betrifft darüber hinaus auch einen Drehgeber mit einer solchen Vorrichtung.

Die oben genannten Vorrichtungen werden für Drehgeber verwendet, um die Messgenauigkeit zu verbessern und Fehler zu korrigieren. Ein Drehgeber weist in der Regel eine Magnetsensoreinrichtung mit wenigstens einem Magnetsensorelement und einer Maßverkörperung, beispielsweise ein Polrad oder eine Polscheibe auf, die von der Magnetsensoreinrichtung abgetastet werden kann. Die Magnetsensoreinrichtung muss dabei so in Bezug auf die Maßverkörperung positioniert sein, dass sie diese abtasten kann oder, mit anderen Worten, die magnetischen Felder der Maßverkörperung detektieren kann. Alternativ zu den magnetischen Drehgebern sind auch Drehgeber bekannt, die auf anderen physikalischen Prinzipien beruhen und beispielsweise optische oder induktive Effekte nutzen.

Die Druckschrift US 2019 390 984 offenbart eine Winkelmessvorrichtung mit einem Rotor sowie zwei Positionssensoren. Ein Positionssensor erfasst den verzahnten Bereich des Rotors und der andere Positionssensor erfasst einen nicht verzahnten Bereich des Rotors.

Aus dem Dokument US 2011 084 691 A1 ist ein Rotationsdetektor bekannt, welcher einen ersten und einen zweiten Abstandssensor aufweist sowie eine Achsenverschiebungseinheit zur Erfassung einer Achsenverschiebung durch eine Abstandsverschiebung, erfasst durch den ersten oder den zweiten Sensor.

Es ist die Aufgabe der Erfindung, einen Drehgeber und ein Korrekturverfahren bereitzustellen, durch die die Genauigkeit bei der Winkelbestimmung verbessert ist und Fehler korrigiert werden können.

Diese Aufgabe ist für den Drehgeber dadurch gelöst, dass der Drehgeber gemäß Anspruch 1 ausgestaltet ist.

Für das eingangs genannte Korrekturverfahren ist die Aufgabe durch ein Verfahren gemäß Anspruch 12 gelöst.

Die erfindungsgemäße Lösung erlaubt es, die Position der Magnetsensoreinrichtung in Bezug auf die Maßverkörperung anhand der gemessenen magnetischen Flussdichte zu bestimmen und Kenntnis über die relative Position dieser beiden Elemente zueinander zur Berechnung von Korrekturwerten zu verwenden. Insbesondere zur Korrektur von Fehlern, bzw. Imperfektionen, die durch die Geometrie und Physik des Polrads bedingt sind. Eine weitere mögliche Fehlerquelle ist eine nicht-optimale Justage der beiden Elemente zueinander.

Die Vorrichtung dient bevorzugt zur Ausführung des erfindungsgemäßen Korrekturverfahrens. Bevorzugt dient die Vorrichtung zur Ausführung des erfindungsgemäßen Korrekturverfahrens in einem erfindungsgemäßen Drehgeber.

Die erfindungsgemäße Lösung kann durch verschiedene, jeweils für sich vorteilhafte und beliebig miteinander kombinierbare Ausgestaltungen weiter verbessert werden. Auf diese Ausgestaltungsformen und die mit ihnen verbundenen Vorteile ist im Folgenden eingegangen. Die beschriebenen Ausgestaltungen können sämtlich für das erfindungsgemäße Korrekturverfahren verwendet werden. Die in Bezug auf die Vorrichtung beschriebenen Vorteile gelten ebenso für das Korrekturverfahren und umgekehrt. Gemäß einer ersten vorteilhaften Ausgestaltung der erfindungsgemäßen Vorrichtung kann diese eine Datenverarbeitungseinheit eines Drehgebers sein. Mit anderen Worten kann die Vorrichtung so ausgestaltet sein, dass sie sich innerhalb eines Gehäuses eines Drehgebers unterbringen lässt. Alternativ dazu kann die Vorrichtung auch als separate Vorrichtung zur Datenverarbeitung ausgestaltet sein, welche datenübertragend mit einem Drehgeber verbindbar ist. Die Vorrichtung kann als Hardware, Software oder als Kombination von beidem realisiert sein. Das Korrekturverfahren kann in der Datenverarbeitungseinheit des Drehgebers und/oder in einem handelsüblichen Personal Computer durchgeführt werden. Erfindungsgemäß ist die wenigstens eine Magnetsensoreinrichtung so ausgestaltet, dass sie magnetische Flussdichten in mindestens zwei voneinander unabhängigen Raumrichtungen messen kann. Die Magnetsensoreinrichtung ist daher bevorzugt ein "3D-Magnetsensor". Die Maßverkörperung des Drehgebers ist bevorzugt ein Polrad, eine Polscheibe oder ein Diametralmagnet, jeweils mit sich in Umfangsrichtung einander abwechselnden magnetischen Polen, die z.B. eine regelmäßige Codierung bilden.

Um die Berechnung von Korrekturwerten zu vereinfachen, ist die Vorrichtung erfindungsgemäß ausgestaltet, wenigstens einen Korrekturwert aus wenigstens einem, insbesondere genau einem, zu einem Zeitpunkt gemessenen Momentanwert der magnetischen Flussdichte zu berechnen, wobei der Momentanwert bevorzugt mehrere Komponenten beinhaltet, die voneinander unabhängige Raumrichtungen repräsentieren.

Anhand der Momentanwerte zu den unterschiedlichen Raumrichtungen können Korrekturwerte berechnet werden. Dies ist vorteilhaft, da hierbei keine dauerhafte Rotation der Maßverkörperung notwendig ist. Ebenso ist es möglich, Momentanwerte in regelmäßigen oder unregelmäßigen zeitlichen Abständen zu messen und dadurch eine regelmäßige Korrektur anhand von Momentanwerten durchzuführen.

Zusätzlich kann es möglich sein, die magnetische Flussdichte zu mehreren Zeitpunkten zu messen oder auch kontinuierlich zu messen. Solche Werte können beispielsweise genutzt werden, um Defekte in der Maßverkörperung zu erkennen und zu korrigieren. Hierauf ist weiter unten nochmal eingegangen.

Die Vorrichtung ist bevorzugt ferner ausgestaltet, eine axiale Position der wenigstens einen Magnetsensoreinrichtung in Bezug auf die Maßverkörperung aus den gemessenen Flussdichten zu bestimmen, also zu berechnen. Hierbei kommen bevorzugt Momentanwerte zum Einsatz. Ist beispielsweise die Maßverkörperung entlang ihrer axialen Richtung in Bezug auf die Magnetsensoreinrichtung verschoben, kann das Ausmaß der Verschiebung bestimmt und bei der Winkelbestimmung berücksichtigt werden. Der Begriff "axial" bezieht sich dabei auf die Drehachse der Maßverkörperung.

Entsprechend der erfindungsgemäßen Vorrichtung wird ein Abstand der wenigstens einen Magnetsensoreinrichtung von der wenigstens einen Maßverkörperung aus den gemessenen Flussdichten bestimmt. Hierbei kommen bevorzugt Momentanwerte zum Einsatz. Die Kenntnis des Abstands kann beispielsweise genutzt werden, um eine fehlerhafte Positionierung der

Magnetsensoreinrichtung in Bezug auf die Maßverkörperung zu korrigieren. Darüber hinaus kann der berechnete

Abstandswert genutzt werden, um weitere Korrekturen in Bezug auf die Position vorzunehmen. Beispielsweise kann eine Exzentrizität in der Maßverkörperung, welche sich durch einen bei der Umdrehung der Maßverkörperung periodisch veränderlichen Abstand auswirkt, bestimmt und korrigiert werden. Um eine solche Exzentrizität zu erkennen, kann der Abstand zu verschiedenen Zeitpunkten der Drehung der Maßverkörperung bestimmt werden. Die Bestimmung des Abstands kann noch verbessert werden, wenn zuvor die oben beschriebene axiale Position der Maßverkörperung in Bezug auf die Magnetsensoreinrichtung bestimmt wird.

Die Vorrichtung ist bevorzugt ferner dazu ausgestaltet, wenigstens einen von wenigstens einem Temperatursensor gelieferten Temperaturwert als Korrekturfaktor für die wenigstens eine Größe einzubeziehen. Dies kann von Vorteil sein, da die Magnetfeldstärke mit steigender Temperatur abnimmt, was wiederum zu Fehlern in der Bestimmung der wenigstens einen Größe, insbesondere bei der Abstandsbestimmung führen könnte.

Gemäß einer weiteren vorteilhaften Ausgestaltung kann die Vorrichtung ausgestaltet sein, wenigstens einen Defekt der Maßverkörperung zu erkennen und diesen Defekt als Referenzposition für die Winkelmesswerte, also für die Winkelbestimmung, zu verwenden. Ein Defekt kann beispielsweise dadurch gebildet sein, dass wenigstens ein Pol der Maßverkörperung eine von den anderen Polen abweichende Länge oder abweichende Magnetfeldstärken besitzt. Für die Pole der Maßverkörperung kann es Toleranzbereiche geben, die angeben, ob ein Pol eine reguläre Größe und/oder Magnetstärke aufweist. Liegt der entsprechende Wert außerhalb des Toleranzbereichs, gilt dieser Pol als defekt. Solch eine Anomalie, bzw. ein Defekt kann beispielsweise bewusst in die Maßverkörperung eingebracht werden, um eine Referenzposition für die Winkelbestimmung zu erzeugen. Mit anderen Worten kann die Maßverkörperung eine bis auf eine Anomalie bzw. Defektstelle regelmäßige Codierung aufweisen, wobei der Drehgeber ausgestaltet ist, die Anomalie als Referenzposition zu erkennen und zu verwenden. In diesem Fall kann auf zusätzliche Referenzen verzichtet werden.

Besonders vorteilhaft ist es, wenn der erkannte Defekt durch die Vorrichtung so korrigiert wird, dass auch an der Stelle des Defekts eine Winkelbestimmung fehlerfrei möglich ist.

Der erfindungsgemäße Drehgeber kann dadurch verbessert werden, dass die wenigstens eine Magnetsensoreinrichtung wenigstens einen Hall-Sensor, insbesondere wenigstens einen 3D-Hall-Sensor umfasst. In der Regel weist die Magnetsensoreinrichtung eine Vielzahl von einzelnen Sensorelementen auf. Bevorzugt sind diese nah beieinander in der Magnetsensoreinrichtung angeordnet, so dass die Magnetsensoreinrichtung quasi punktförmig ist. Hiermit ist gemeint, dass der Abstand zweier Sensorelemente der Magnetsensoreinrichtung vorzugsweise weniger als 1 mm, bevorzugt weniger als 500 μm und besonders bevorzugt weniger als 150 μm beträgt. Jedes der Sensorelemente ist bevorzugt ein Hall-Sensor und diese Sensorelemente bilden zusammen bevorzugt einen 3D-Hall-Sensor.

Gemäß einer weiteren vorteilhaften Ausgestaltung des erfindungsgemäßen Drehgebers ist der Drehgeber mit wenigstens einem oben genannten 3D-Hall-Sensor und darüber hinaus mit wenigstens einer weiteren Magnetsensoreinrichtung versehen, wobei die weitere Magnetsensoreinrichtung bevorzugt wenigstens ein magnetoresistives Sensorelement aufweist. Die Kombination von wenigstens einem 3D-Hall-Sensor mit wenigstens einem magnetoresistiven Sensorelement ist besonders vorteilhaft, da hierbei der 3D-Hall-Sensor zur Bestimmung der Position der Magnetsensoreinrichtung zu der Maßverkörperung und damit zur Erzeugung der Korrekturwerte benutzt werden kann und das magnetoresistive Sensorelement zur eigentlichen Winkelbestimmung, bzw. zum Betrieb des Drehgebers, wobei zur Auswertung der Winkel auf die durch den 3D-Hall-Sensor gewonnenen Korrekturwerte zurückgegriffen werden kann. Bevorzugt sind der 3D-Hall-Sensor und das magnetoresistive Sensorelement möglichst nahe beieinander, so dass auch hier bevorzugt ein quasi punktförmiger Sensor gebildet ist. Besonders bevorzugt ist das wenigstens eine magnetoresistives Sensorelement mit dem 3-D Hallsensor, bzw. den zwei 3D-Hall-Sensoren in einer gemeinsamen Magnetsensoreinrichtung kombiniert. Mit anderen Worten weist die erfindungsgemäße Magnetsensoreinrichtung bevorzugt wenigstens einen 3D-Hall-Sensor und wenigstens ein magnetoresistives Sensorelement auf.

Im Folgenden ist die Erfindung beispielhaft anhand einer vorteilhaften Ausführungsform mit Bezug auf die Zeichnungen näher erläutert. Die bei der Ausführungsform beispielhaft dargestellte Merkmalskombination kann nach Maßgabe der obigen Ausführungen entsprechend der für einen bestimmten Anwendungsfall notwendigen Eigenschaften des erfindungsgemäßen Messsystems durch weitere Merkmale ergänzt werden. Auch können, ebenfalls nach Maßgabe der obigen Ausführungen, einzelne Merkmale bei der beschriebenen Ausführungsform weggelassen werden, wenn es auf die Wirkung dieses Merkmals in einem konkreten Anwendungsfall nicht ankommt. In den Zeichnungen werden für Elemente gleicher Funktion und/oder gleichen Aufbaus stets dieselben Bezugszeichen verwendet.

Es zeigen:

Fig. 1 schematisch einen erfindungsgemäßen Drehgeber mit einer erfindungsgemäßen Vorrichtung;

Fig. 2 schematisch eine Maßverkörperung mit einer Magnetsensoreinrichtung; und

Fig. 3 schematisch die magnetischen Flussdichten.

Im Folgenden sind die erfindungsgemäße Vorrichtung und der erfindungsgemäße Drehgeber mit Bezug auf die Figuren beschrieben. Anschließend wird die Berechnung verschiedener Korrekturwerte im Sinne der Erfindung ebenfalls mit Bezug auf diese Figuren erläutert.

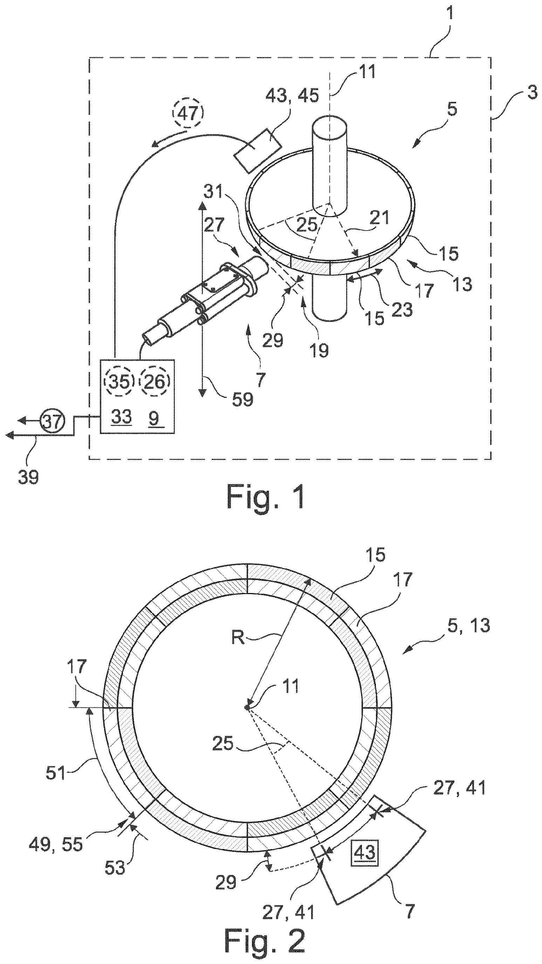

Fig. 1 zeigt schematisch einen erfindungsgemäßen Drehgeber 1. Der Drehgeber 1 kann durch ein Gehäuse 3 abgegrenzt sein. Zum Drehgeber 1 gehört in der Regel eine drehbare Maßverkörperung 5 und wenigstens eine Magnetsensoreinrichtung 7. Darüber hinaus ist der Drehgeber 1 bevorzugt mit einer erfindungsgemäßen Vorrichtung 9 versehen. Die Maßverkörperung 5, die Magnetsensoreinrichtung 7 und die Vorrichtung 9 sind bevorzugt innerhalb des Gehäuses 3 angeordnet.

Alternativ dazu können die Elemente auch separat voneinander ohne gemeinsames Gehäuse angeordnet sein und bilden zusammen den erfindungsgemäßen Drehgeber 1. Die Vorrichtung 9 ist bevorzugt datenübertragend mit der wenigstens einen Magnetsensoreinrichtung 7 verbunden, unabhängig davon, ob die Vorrichtung 9 im Gehäuse des Drehgebers 3 angeordnet ist oder außerhalb.

Die Maßverkörperung 5 ist um eine Achse 11 drehbar und weist ein Polrad 13 auf, welches eine Vielzahl von alternierenden magnetischen Polen 15 und 17 aufweist. Die alternierenden Pole 15, 17 bilden eine Kodierung 19 des Polrads 13. Durch das Polrad 13 sind Richtungen definiert. Zu der axialen Richtung 11, die durch die Drehachse 11 vorgegeben ist und mit dieser identisch sein soll, gibt es zudem die sich von der Achse 11 senkrecht weg erstreckende radiale Richtung 21 und eine quer zu der Drehachse 11 und quer zu der radialen Richtung 21 erstreckende tangentiale Richtung 23. Das Polrad besitzt einen Radius R.

Der Drehgeber 1 dient in erster Linie zur Bestimmung eines Winkels 25, um den sich das Polrad 13 gedreht hat. Darüber hinaus kann der Drehgeber 1 auch zum Zählen von Umdrehungen um die Achse 11 genutzt werden. In Fig. 1 ist lediglich beispielhaft ein Winkel 25 angedeutet. Die vom Drehgeber berechneten Winkelmesswerte 26 geben in möglichst guter Näherung den tatsächlichen Winkel 25 wieder. Wie genau die berechneten Winkelmesswerte 26 mit dem tatsächlichen Winkel 25 übereinstimmen sollen, kann von der Art der Anwendung des Drehgebers 1 abhängen. Durch die erfindungsgemäße Vorrichtung 9 und das erfindungsgemäße Korrekturverfahren soll die Genauigkeit der Bestimmung des tatsächlichen Winkels 25 verbessert werden.

Die wenigstens eine Magnetsensoreinrichtung 7 dient zur Abtastung der Maßverkörperung 5, also des Polrads 13. Folglich ist die Magnetsensoreinrichtung 7 so angeordnet, dass die magnetischen Felder der Pole 15 und 17 von wenigstens einem in der Magnetsensoreinrichtung 7 angeordneten Sensorelement 27 detektiert werden können. Dazu ist die Magnetsensoreinrichtung 7 in einem nominellen Abstand 29 zur Maßverkörperung 5 angeordnet. Durch den Abstand 29 kann ein Luftspalt 31 zwischen der Magnetsensoreinrichtung 7 und der Maßverkörperung 5 gebildet sein.

Die Vorrichtung 9 kann die von der Magnetsensoreinrichtung 7 gemessenen Werte 34 empfangen und weiterverarbeiten. Die gemessenen Werte 34 können insbesondere die Komponenten der magnetischen Flussdichte B umfassen, wobei bevorzugt jedes Sensorelement 27 eigene Werte liefert und diese gegebenenfalls mit einer Kennzeichnung versieht, von welchem Sensorelement 27 die Werte gemessen wurden.

Die Vorrichtung 9 kann Teil einer Datenverarbeitungseinrichtung 33 des Drehgebers 1 sein. Sie kann auch identisch mit der Datenverarbeitungseinrichtung 33 sein. Alternativ dazu kann die Vorrichtung 9 auch separat vom Drehgeber 1 ausgestaltet und mit wenigstens einer Datenleitung zum Empfang der von der Magnetsensoreinrichtung 7 gemessenen Werte 34 mit der Magnetsensoreinrichtung 7 verbunden sein.

Die Vorrichtung 9 kann Korrekturwerte 35 erzeugen und diese zur Verarbeitung der gemessenen Winkelmesswerte 26 verwenden. Hieraus können korrigierte Winkelmesswerte 37 erzeugt werden. Bevorzugt gibt der Drehgeber 1 die korrigierten Winkelmesswerte 37 aus, sodass die Korrekturwerte 35 nur innerhalb des Drehgebers 1 zur Korrektur verwendet werden. Alternativ oder zusätzlich kann der Drehgeber 1 zu Dokumentation- oder Überprüfungszwecken auch die Korrekturwerte 35 selbst ausgeben. Zur Ausgabe von Werten ist der Drehgeber 1 mit einer nach außen führenden Datenleitung 39 versehen, welche direkt oder indirekt mit der Vorrichtung 9 verbunden ist. Die Datenleitung 39 kann kabelgebunden oder kabellos gebildet sein.

Die Sensorelemente 27 sind bevorzugt Hall-Sensoren 41 für wenigstens zwei Raumrichtungen, bevorzugt für drei Raumrichtungen, also 2D-Hall-Sensoren oder 3D-Hall-Sensoren.

Bevorzugt weist der Drehgeber wenigstens eine weitere Magnetsensoreinrichtung 43 auf, die bevorzugt wenigstens ein magnetoresistives Sensorelement 45 umfasst. Die weitere Magnetsensoreinrichtung 43 ist bevorzugt ebenfalls datenübertragend mit der Vorrichtung 9 verbunden um die von ihr gemessenen Werte 47 an diese zu übertragen.

Besonders bevorzugt ist die wenigstens eine weitere Magnetsensoreinrichtung 43 in der ersten Magnetsensoreinrichtung 7 integriert, sodass diese im Wesentlichen an der gleichen Position angeordnet sein können. In diesem Fall kann das wenigstens eine magnetoresistive Sensorelement 45 auch als Teil der Magnetsensoreinrichtung 7 aufgefasst werden. Hierdurch kann es möglich sein, die Magnetsensoreinrichtung 7 zur Bestimmung der relativen Position der Einrichtung 7 zur Maßverkörperung 5 zu verwenden und die wenigstens eine weitere Magnetsensoreinrichtung 43 zur eigentlichen Winkelmessung zu verwenden.

Die Maßverkörperung 5 ist bevorzugt mit wenigstens einer Referenzposition 49 versehen, welche als Referenz zur Bestimmung eines Winkels 25 dienen kann. In Fig. 2 ist lediglich beispielhaft dargestellt, dass einer der Pole 17 eine Länge 51 aufweist, die von der Länge 53 der übrigen Pole 15, 17 abweicht. Im dargestellten Beispiel ist die Länge 51 kleiner als die Länge 53. Alternativ dazu kann die Länge 51 auch größer als die Länge 53 sein. Die von den übrigen Längen 53 abweichende Länge 51 kann als Referenzposition 49, sozusagen als Nullpunkt, verwendet werden.

Alternativ dazu kann auch wenigstens einer der Pole 15, 17 mit einer Magnetisierung oder Remanenz versehen sein, die von der Stärke der übrigen Magnete abweicht. Die abweichende Länge 51 oder eine abweichende Magnetstärke kann als gewollte Anomalie 55 bzw. gewollter Defekt 55 in die Maßverkörperung 5 eingebracht sein. Auf diese Weise kann auf ein zusätzliches Element zur Bestimmung der Referenzposition 49, beispielsweise ein zusätzliches Polrad oder einen zusätzlichen Magneten, verzichtet werden. Der Drehgeber 1 kann dadurch kompakt gestaltet sein.

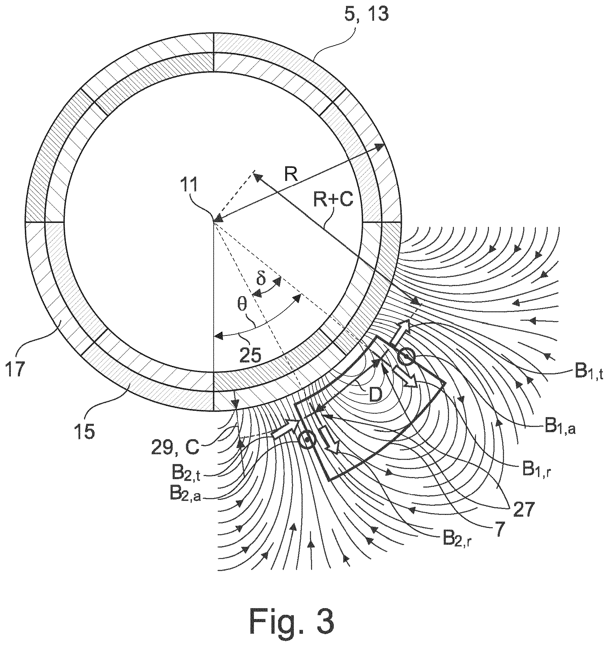

Im Folgenden ist mit Bezug auf die Fig. 3 auf die Sensorelemente 27 eingegangen. Wie schon oben beschrieben, sind die Sensorelemente 27 bevorzugt Hallsensoren 41, beispielsweise 2D- oder 3D-Hallsensoren. Die Sensorelemente 27 dienen zur Messung der magnetischen Flussdichte B, die eine vektorielle Größe ist. Dabei können die Hallsensoren die magnetische Flussdichte B in jeweils mindestens zwei Raumrichtungen messen.

Die Komponenten der magnetischen Flussdichte B sind in Fig. 3 schematisch eingezeichnet. Jeder der beiden Sensoren 27 misst eine zur tangentialen Richtung 23 parallele tangentiale Komponente $B_{tangential}$ ($B_{tan}$), eine zur axialen Richtung 11 parallele axiale Komponente $B_{axial}$ ($B_a$) und eine zur radialen Richtung 21 parallele radiale Komponente $B_{radial}$ ($B_r$). Die Sensoren 27 sind dabei in der Regel gleich ausgerichtet. Durch die unterschiedlichen Positionen messen sie jedoch voneinander unterschiedliche Werte für die einzelnen Komponenten.

Da jeder der beiden Sensoren eigene Messwerte liefert, sind die Komponenten in Fig. 3 zusätzlich mit einem Index 1 oder 2 gekennzeichnet. Bevorzugt bezieht sich der zuvor beschriebene Abstand 29 zwischen der Magnetsensoreinrichtung 7 und der Maßverkörperung 5 auf den zusätzlich mit C gekennzeichneten Abstand der Sensorelemente 27 zur Maßverkörperung 5.

Im Folgenden ist die Bestimmung verschiedener Korrekturwerte 35 anhand der gemessenen Werte der magnetischen Flussdichte B beschrieben.

Die axiale Position 59 der Magnetsensoreinrichtung 7 in Bezug auf die Maßverkörperung 5 lässt sich durch die gemessenen magnetischen Flussdichten B bestimmen. Hierzu reichen prinzipiell die zu einem Zeitpunkt t gemessenen Flussdichten B eines der beiden Sensoren 27 aus. Mit einem einzelnen Sensor 27 kann die axiale Position an fast allen Winkelpositionen bestimmt werden, außer an den Polstellen, denn es gibt eine Winkelposition, an der der Term sin(arctan2(B_radial, B_tangential)) = 0 ist. Dies bildet eine Polstelle in der Formel für die axiale Position (siehe unten).

Mit zwei Sensoren kann dieses Problem der Polstelle jedoch beseitigt werden, daher werden bevorzugt beide Sensoren 27 verwendet.

Es kann ein zu einem Zeitpunkt t gemessener Momentanwert $B_t$ ausreichen, wobei der Momentanwert $B_t$ die Flussdichten in allen drei Richtungen umfasst.

Die axiale Position 59 kann dann durch folgende Formel approximiert werden:

$$Axiale\ Position\ (59) = \pm a \cdot \arctan\left( b \cdot \frac{\left( \frac{B_{axial}}{\sin(arctan2(B_{radial}, B_{tangential}))} \right)^2}{|\vec{B}|} \right)$$

Hierbei beziehen sich die Konstanten a und b auf vorher gemessene oder simulierte Korrekturfaktoren. Die Faktoren a und b können Eigenschaften der Maßverkörperung 5 betreffen, bspw. geometrische oder magnetische Eigenschaften.

Der Abstand 29, bzw. C zwischen der Magnetsensoreinrichtung 7 und der Maßverkörperung 5 kann ebenfalls ausschließlich anhand von Momentanwerten, die zu einem Zeitpunkt t gemessen wurden, approximiert werden.

Eine vereinfachte Approximation kann wie folgt berechnet werden.

$$C = \frac{1}{b} \cdot \ln\left(\frac{|\vec{B}|}{a}\right)$$

Hierbei beziehen sich die Konstanten a und b auf vorher gemessene oder simulierte Korrekturfaktoren, welche Eigenschaften der Maßverkörperung 5 betreffen. Diese Faktoren müssen mit den Faktoren der obigen Formel für die axiale Position 59 nicht identisch sein. Um eine verbesserte Genauigkeit der Abstandsbestimmung zu erreichen, kann darüber hinaus vorzugsweise auch die axiale Position berücksichtigt werden.

Der für den Abstand 29 berechnete Wert C kann für weitere Korrekturen verwendet werden. Beispielsweise kann der Wert C weiterverwendet werden um die Ausrichtung der einzelnen Sensorelemente in Bezug auf die Maßverkörperung 5 als Fehlereinfluss zu korrigieren.

Die Ausrichtung kann beispielsweisen mittels einer Rotationsmatrix korrigiert werden, die abhängig ist von $\delta$, dem Winkel zwischen den beiden Sensorelementen 27.

Eine weitere Korrektur, welche ausschließlich anhand von zu einem Zeitpunkt t gemessenen Momentanwerten erfolgen kann, ist die Kompensation von Harmonischen in den magnetischen Feldstärken. Durch diese Kompensation kann eine hohe Winkelpositionsgenauigkeit über einen größeren mechanischen Toleranzbereich erreicht werden.

In einem weiteren Verfahrensschritt kann die Winkelpositionsgenauigkeit weiter verbessert werden. Anhand der Erkenntnis, dass sich das Amplitudenverhältnis der von den Sensorelementen 27 typischerweise gelieferten Sinus- und Cosinuskurven in Abhängigkeit des Abstands 29, bzw. C, verändert, kann der zuvor bestimmte Abstand C zur Kompensation dieses Fehlers verwendet werden.

Eine weitere Korrektur, welche sowohl auf den zu einem Zeitpunkt t gemessenen Momentanmesswerten als auch auf Messwerten aus der Vergangenheit beruht, kann zur Kompensation von Einflüssen einer Imperfektion der Maßverkörperung 5 auf die Winkelposition genutzt werden. Dazu werden die folgenden zwei Schritte ausgeführt: Einen Korrekturwert KOR zur Korrektur von Imperfektionen in der Maßverkörperung 5 bestimmen und anschließend die Bestimmung der korrigierten Winkelposition $\theta_{korr}$.

Der Korrekturwert KOR kann folgendermaßen berechnet werden:

$$KOR_k = a \sum_{i=1}^{k} (\theta_{1,i} - \theta_{2,i} - \delta_i)(\theta_i - \theta_{i-1})$$

Hierbei bezieht sich die Konstante a auf einen vorher gemessenen oder simulierten Faktor. In einer Umsetzung der Summenberechnung können auch nur Messwerte aus einem gewissen Fenster aufsummiert werden oder z.B. eine exponentielle Gewichtung vorgenommen werden, um nur relevante Werte abspeichern zu müssen.

Anschließend kann die korrigierte Winkelposition aus dem gemessenen Winkel und dem Korrekturwert gebildet werden:

$$\theta_{korr,k} = \theta_k + KOR_k$$

Bei diesen Formeln bezeichnen θ1: Winkel des ersten Sensorelements innerhalb eines Polpaars (ein Polpaar = 360°) und_ θ2 den Winkel des zweiten Sensorelements innerhalb eines Polpaars (ein Polpaar = 360°).

Θ steht für den Winkel der Magnetsensoreinrichtung. Dieser kann gleich θ1 oder θ2 oder z.B. gleich der Mitte davon sein.

Der Winkel zwischen den beiden Sensorelementen 27 wird mit Δ bezeichnet und ist auch in Fig. 3 dargestellt.

Der Index k bezeichnet den jeweils aktuellsten, neusten Wert und der Index i den Index, über den aufsummiert wird. i kleiner als k bezeichnen Werte der Vergangenheit.

Diese Korrektur kann folglich einzig mittels während der Laufzeit aufgenommenen Messwerte geschehen. Es muss kein Vergleich dieser Messwerte mit anderen Informationen durchgeführt werden. Damit spielen sich ändernde Bedingungen keine Rolle.

**Patentansprüche**

1. Drehgeber (1) zur Winkelbestimmung, mit wenigstens einer drehbaren Maßverkörperung (5) und mit wenigstens einer Magnetsensoreinrichtung (7) zur Abtastung der Maßverkörperung (5), wobei die Magnetsensoreinrichtung (7) ausgestaltet ist, in mindestens zwei voneinander unabhängigen Raumrichtungen die magnetische Flussdichte (B) zu bestimmen, mit einer Vorrichtung (9) zur Berechnung von Korrekturwerten (35) für Winkelmesswerte (26) des Drehgebers (1), wobei die Vorrichtung (9) ausgestaltet ist,

- einen von der Magnetsensoreinrichtung (7) des Drehgebers (1) gemessenen Momentanwert (Bt) der magnetischen Flussdichte (B) in wenigstens zwei Raumrichtungen zu empfangen,
- zu einem Zeitpunkt (t) an einem Winkelmesswert (26) wenigstens einen Abstand (29, C) der Magnetsensoreinrichtung (7) zu der Maßverkörperung (5) des Drehgebers (1) aus dem empfangenen Momentanwert (Bt) der magnetischen Flussdichte (B) zu berechnen und
- aus dem berechneten Abstand (29, C) wenigstens einen Korrekturwert (35) für die Winkelmesswerte (26) zu berechnen.

2. Drehgeber (1) nach Anspruch 1, wobei die Vorrichtung (9) ferner ausgestaltet ist, einen von der Magnetsensoreinrichtung (7) des Drehgebers (1) gemessenen Momentanwert (Bt) der magnetischen Flussdichte (B) in wenigstens drei Raumrichtungen zu empfangen, daraus eine axiale Position (59) der wenigstens einen Magnetsensoreinrichtung (7) in Bezug auf die Maßverkörperung (5) aus den gemessenen Flussdichten (B) zu bestimmen und aus der axialen Position und/oder dem berechneten Abstand (29, C) wenigstens einen Korrekturwert (35) für die Winkelmesswerte (26) zu berechnen.

3. Drehgeber (1) nach Anspruch 1 oder 2, wobei die Vorrichtung (9) ferner ausgestaltet ist wenigstens einen von wenigstens einem Temperatursensor gelieferten Temperaturwert als Korrekturfaktor für den Abstand (29, C) und/oder die Position ( 59) einzubeziehen.

4. Drehgeber (1) nach einem der Ansprüche 1 bis 3, wobei die Vorrichtung (9) ferner ausgestaltet ist wenigstens einen vorab gemessenen oder simulierten Korrekturfaktor (a, b), welcher Eigenschaften der Maßverkörperung (5) betrifft, in die Berechnung des Abstandes (29, C) und/oder der Position (59) einzubeziehen.

5. Drehgeber (1) nach einem der Ansprüche 1 bis 4, wobei die Vorrichtung (9) ferner ausgestaltet ist, wenigstens eine Anomalie (55) der Maßverkörperung (5) zu erkennen.

6. Drehgeber (1) nach Anspruch 5, wobei die Vorrichtung (9) ferner ausgestaltet ist, wenigstens eine Anomalie (55) bei der Bestimmung der Winkelmesswerte (26) zu kompensieren.

7. Drehgeber (1) nach Anspruch 5 oder 6, wobei die Vorrichtung (9) ferner ausgestaltet ist, die wenigstens eine Anomalie (55) als Referenzposition (49) für die Winkelmesswerte (26) zu verwenden.

8. Drehgeber (1) nach einem der Ansprüche 1 bis 7, wobei die wenigstens eine Magnetsensoreinrichtung (7) wenigstens einen Hall-Sensor (41) und/oder wenigstens ein magnetoresistives Sensorelement (45) umfasst.

9. Drehgeber (1) nach einem der Ansprüche 1 bis 7, wobei der Drehgeber wenigstens ein magnetoresistives Sensorelement (45) zur Bestimmung der Winkelmesswerte (26) und wenigstens einen Hall-Sensor (41) zur Bestimmung wenigstens eines Korrekturwertes (35) für die Winkelmesswerte (26) umfasst.

10. Drehgeber (1) nach einem der Ansprüche 1 bis 9, wobei die magnetische Sensoreinrichtung (7) zusätzlich zur Bestimmung der magnetischen Flussdichte (B) in verschiedenen Raumrichtungen auch zur Detektion einer Drehung der Maßverkörperung (5) ausgestaltet ist.

11. Drehgeber (1) nach einem der Ansprüche 1 bis 10, wobei die wenigstens eine Maßverkörperung (5) wenigstens eine gezielt eingebrachte Anomalie (55) als Referenzposition (49) für die Winkelmesswerte (26) aufweist.

12. Korrekturverfahren für Winkelmesswerte (26) eines Drehgebers (1) mit wenigstens einer drehbaren Maßverkörperung (5) und mit wenigstens einer Magnetsensoreinrichtung (7) und mit einer Vorrichtung (9) zur Berechnung von Korrekturwerten (35) für die Winkelmesswerte (26), wobei wenigstens ein von der Magnetsensoreinrichtung (7) des Drehgebers (1) gemessener Momentanwert (Bt) der magnetischen Flussdichte (B) in wenigstens zwei Raumrichtungen von der Vorrichtung (9) empfangen wird, wenigstens ein Abstand (29, C) der Magnetsensoreinrichtung (7) zu der Maßverkörperung (5) des Drehgebers (1) aus dem empfangenen Momentanwert (Bt) zu einem Zeitpunkt (t) an einem Winkelmesswert berechnet wird, und aus dem berechneten Abstand (29, C) wenigstens ein Korrekturwert (35) für die Winkelmesswerte (26) berechnet wird.

**Claims**

1. Encoder (1) for angle determination with at least one rotatable material measure (5) and with at least one magnetic sensor equipment (7) for scanning the material measure (5), the magnetic sensor equipment (7) being designed to determine the magnetic flow density (B) in at least two spatial directions independent from each other, with a device (9) to calculate correction values (35) for angular measuring values (26) of the encoder (1), the device (9) being designed

   • to receive an instantaneous value (Bt) of the magnetic flow density (B) measured by the magnetic sensor equipment (7) of the encoder (1) in at least two spatial directions,
   • to calculate - at a point in time (t) at an angular measuring value (26) - at least a distance (29, C) of the magnetic sensor equipment (7) to the material measure (5) of the encoder (1) from the received instantaneous value (Bt) of the magnetic flow density (B), and
   • to calculate from the calculated distance (29, C) at least one correction value (35) for the angular measuring values (26).

2. Encoder (1) according to claim 1, wherein the device (9) is furthermore designed to receive an instantaneous value (Bt) of the magnetic flow density (B) measured by the magnetic sensor equipment (7) of the encoder (1) in at least three spatial directions, determine therefrom an axial position (59) of the at least one magnetic sensor equipment (7) in relation to the material measure (5) from the measured flow densities (B) and calculate - from the axial position and/or the calculated distance (29, C) - at least one correction value (35) for the angular measuring values (26).

3. Encoder (1) according to claim 1 or 2, wherein the device (9) is furthermore designed to include at least one temperature value - provided by at least one temperature sensor - as a correction factor for the distance (29, C) and/or the position (59).

4. Encoder (1) according to any one of the claims 1 to 3, wherein the device (9) is further designed to include into the calculation of the distance (29, C) and/or the position (59) at least one correction factor (a, b) measured or simulated in advance which concerns the properties of the material measure (5).

5. Encoder (1) according to any one of the claims 1 to 4, wherein the device (9) is furthermore designed to detect at least one anomaly (55) of the material measure (5).

6. Encoder (1) according to claim 5, wherein the device (9) is furthermore designed to compensate at least one anomaly (55) in the determination of the angular measuring values (26).

7. Encoder (1) according to claim 5 or 6, wherein the device (9) is further designed to use the at least one anomaly (55) as a reference position (49) for the angular measuring values (26).

8. Encoder (1) according to any one of the claims 1 to 7, wherein the at least one magnetic sensor equipment (7) comprises at least one Hall-sensor (41) and/or at least one magnetoresistive sensor element (45).

9. Encoder (1) according to any one of the claims 1 to 7, wherein the encoder comprises at least one magnetoresistive sensor element (45) for the determination of angular measuring values (26) and at least one Hall-sensor (41) for the determination of at least one correction value (35) for the angular measuring values (26).

10. Encoder (1) according to any one of the claims 1 to 9, wherein the magnetic sensor equipment (7) is also designed for the detection of a rotation of the material measure (5) - in addition to the determination of the magnetic flow density (B) in different spatial directions.

11. Encoder (1) according to any one of the claims 1 to 10, wherein the at least one material measure (5) has at least one specifically introduced anomaly (55) as a reference position (49) for the angular measuring values (26).

12. Correction method for angular measuring values (26) of an encoder (1) with at least one rotatable material measure (5) and with at least one magnetic sensor equipment (7) and with a device (9) for the calculation of correction values (35) for the angular measuring values (26), wherein at least one instantaneous value (Bt) of the magnetic flow density (B) measured by the magnetic sensor equipment (7) of the encoder (1) is received by the device (9) in at least two spatial directions, at least one distance (29, C) of the magnetic sensor equipment (7) to the material measure (5) of the encoder (1) is calculated from the received instantaneous value (Bt) at a point in time (t) at one angular measuring value and - from the calculated distance (29, C) - at least one correction value (35) is calculated for the angular measuring values (26).

**Revendications**

1. Codeur (1) permettant de déterminer un angle, avec au moins un étalon de mesure rotatif (5) et au moins un dispositif de détecteur magnétique (7) pour la détection de l'étalon de mesure (5), le dispositif de détecteur magnétique (7) étant conçu pour déterminer l'induction magnétique (B) dans au moins deux directions spatiales indépendantes l'une de l'autre, avec un dispositif (9) destiné à calculer des valeurs de correction (35) pour des valeurs de mesure d'angle (26) du codeur (1), le dispositif (9) étant conçu

   • pour recevoir une valeur instantanée (Bt) de l'induction magnétique (B) mesurée par le dispositif de détecteur magnétique (7) du codeur (1) dans au moins deux directions spatiales,
   • pour calculer à un moment (t) à une valeur de mesure d'angle (26) au moins une distance (29, C) entre le dispositif de détecteur magnétique (7) et l'étalon de mesure (5) du codeur (1) à partir de la valeur instantanée (Bt) reçue de l'induction magnétique (B) et
   • pour calculer à partir de la distance calculée (29, C) au moins une valeur de correction (35) pour les valeurs de mesure d'angle (26).

2. Codeur (1) selon la revendication 1, le dispositif (9) étant en outre conçu pour recevoir une valeur instantanée (Bt) de l'induction magnétique (B) mesurée par le dispositif de détecteur magnétique (7) du codeur (1) dans au moins trois directions spatiales, déterminer à partir de celle-ci une position axiale (59) du au moins un dispositif de détecteur magnétique (7) par rapport à l'étalon de mesure (5) à partir des inductions mesurées (B) et calculer à partir de la position axiale et/ou de la distance calculée (29, C) au moins une valeur de correction (35) pour les valeurs de mesure d'angle (26).

3. Codeur (1) selon la revendication 1 ou 2, le dispositif (9) étant en outre conçu pour intégrer au moins une valeur de température fournie par au moins un capteur de température en tant que facteur de correction pour la distance (29, C) et/ou la position (59).

4. Codeur (1) selon l'une des revendications 1 à 3, le dispositif (9) étant en outre conçu pour intégrer au moins un facteur de correction (a, b) mesuré ou simulé au préalable, qui concerne des caractéristiques de l'étalon de mesure (5), dans le calcul de la distance (29, C) et/ou de la position (59).

5. Codeur (1) selon l'une des revendications 1 à 4, le dispositif (9) étant en outre conçu pour détecter au moins une anomalie (55) de l'étalon de mesure (5).

6. Codeur (1) selon la revendication 5, le dispositif (9) étant en outre conçu pour compenser au moins une anomalie (55) lors de la détermination des valeurs de mesure d'angle (26).

7. Codeur (1) selon la revendication 5 ou 6, le dispositif (9) étant en outre conçu pour utiliser la au moins une anomalie (55) en tant que position de référence (49) pour les valeurs de mesure d'angle (26).

8. Codeur (1) selon l'une des revendications 1 à 7, le au moins un dispositif de détecteur magnétique (7) comprenant au moins un capteur à effet Hall (41) et/ou au moins un élément détecteur magnétorésistif (45).

9. Codeur (1) selon l'une des revendications 1 à 7, le codeur comprenant au moins un élément détecteur magnétorésistif (45) permettant de déterminer les valeurs de mesure d'angle (26) et au moins un capteur à effet Hall (41) permettant de déterminer au moins une valeur de correction (35) pour les valeurs de mesure d'angle (26).

10. Codeur (1) selon l'une des revendications 1 à 9, le dispositif de détecteur magnétique (7) étant conçu pour déterminer l'induction magnétique (B) dans différentes directions spatiales, mais aussi pour détecter une rotation de l'étalon de mesure (5).

11. Codeur (1) selon l'une des revendications 1 à 10, le au moins un étalon de mesure (5) présentant au moins une anomalie (55) introduite de manière ciblée en tant que position de référence (49) pour les valeurs de mesure d'angle (26).

12. Procédé de correction pour valeurs de mesure d'angle (26) d'un codeur (1) avec au moins un étalon de mesure rotatif (5) et au moins un dispositif de détecteur magnétique (7) et avec un dispositif (9) permettant de calculer des valeurs de correction (35) pour les valeurs de mesure d'angle (26), au moins une valeur instantanée (Bt) d'induction magnétique (B) mesurée par le dispositif de détecteur magnétique (7) du codeur (1) étant reçue dans au moins deux directions spatiales du dispositif (9), au moins une distance (29, C) entre le dispositif de détecteur magnétique (7) et l'étalon de mesure (5) du codeur (1) étant calculée à partir de la valeur instantanée (Bt) reçue à un moment (t) à une valeur de mesure d'angle et au moins une valeur de correction (35) étant calculée pour les valeurs de mesure d'angle (26) à partir de la distance calculée (29, C).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2019390984 A
- US 2011084691 A1